# EUROPEAN PATENT APPLICATION

(11) **EP 0 875 754 A1**
(43) Date of publication of application: **04.11.1998**
(21) Application number: 98201329.4
(22) Date of filing: 24.04.1998
(51) Int. Cl.: G01N 27/403

(54) **Apparatus, magazine and method for electrochemical detection or measurement**

(30) Priority: 29.04.1997 GB 9708585
(71) Applicant: EASTMAN KODAK COMPANY, Rochester, New York 14650 (US)
(72) Inventor: Edwards, Stephen John, Harrow HA1 4TY (GB); McBride, John Joseph, Harrow HA1 4TY (GB); Law, Derek, Harrow HA1 4TY (GB)
(74) Representative: Haile, Helen Cynthia

(57) **Abstract**

An apparatus (1), magazine (2) and method are described for electrochemical detection or measurement. The apparatus (1) includes a magazine (2) with at least two separate cells (4), each cell (4) having analyzing means for measuring or detecting a component of a liquid sample, supplying means for supplying the liquid sample to each cell (4) in a sequential manner, advancing means for advancing the magazine (2) to position the supplying means at a next cell (4). The magazine (2) is advanced in a step wise motion such that a liquid sample can be supplied to each cell (4) in turn in sequence. The results of the analysis in the cells (4) is communicated to a processor.

## Description

This invention relates to an apparatus, magazine and method for electrochemical detection or measurement particularly of a component of an aqueous or organic liquid sample.

Known apparatus for measuring or detecting a component of an aqueous or organic liquid sample are generally in the form of single test cells. European patent no. EP-0170375 describes a sample collecting and testing device with a cavity which has dimensions small enough to enable the sample liquid to be drawn into the cavity by capillary action. The cavity includes an electrode structure for making measurements of one or more electrically measurable characteristic of the sample.

The present invention has the object of providing an apparatus including at least two cells for automatic measuring or detecting the components of a liquid sample. According to a first aspect of the present invention there is provided an apparatus for electrochemical detection or measurement of a component of a liquid comprising:
a magazine having at least two separate cells; each cell having analyzing means for measuring or detecting a component of a liquid sample; supplying means for supplying the liquid sample to each cell in a sequential manner; advancing means for advancing the magazine to position the supplying means at a next cell.

Preferably, the analyzing means includes a reagent.

Preferably, the analyzing means is an electrode structure for making measurements of one or more electrically measurable characteristic.

Preferably, the magazine is replaceable and may be in the form of a rotatable disc. Alternatively, the magazine may be in the form of one of a strip, carousel, roll or film.

The supplying means for supplying the liquid sample to a cell may supply the liquid sample to a lowest cell by means of gravity. Alternatively, the cells may be capillary fill cells and the means for supplying the liquid sample to a cell may be by contact of the liquid sample with an opening to a cell.

Preferable, magazine is supported at an angle.

Preferably, the analyzing means of the cell includes means for analyzing by voltammetry, potentiometry, titration, conductivity, colourmetric analysis or optical analysis.

Preferably, each cell is connected to a processing means for analyzing the results of the measurement or detection.

The cells in the magazine may have the same calibration parameters. Alternatively, the magazine may include cells with different forms of analyzing means. The cells may include more than one form of analyzing means in each cell. Preferably, the apparatus includes automatic magazine replacement.

Preferably, the advancing means is a step motor and advances the magazine to the next adjacent cell.

Preferably, the supplying means is in the form of a peristaltic pump.

According to a second aspect of the present invention there is provided a magazine for electrochemical detection or measurement of a component of a liquid comprising:
at least two separate cells; each cell having analyzing means for measuring or detecting a component of a liquid sample; and each cell having an entrance for input of a liquid sample into the cell.

Preferably, the analyzing means includes a reagent.

Preferably, the analyzing means is an electrode structure for making measurements of one or more electrically measurable characteristics of the liquid sample.

Preferably, the analyzing means analyses by voltammetry, potentiometry, titration, conductivity, colourmetric analysis or optical analysis.

Preferably, the cells are separated by a liquid barrier.

The magazine may be in the form of a disc. Alternatively, the magazine may be in the form of one of a strip, carousel, roll or film.

According to a third aspect of the present invention there is provided a method of electrochemical detection or measurement of a component of a liquid comprising:
supplying a liquid sample to a cell;
analyzing the liquid sample by means for measuring or detecting a component of the liquid sample;
communicating the result of the analysis from the cell;
advancing to a subsequent cell;
repeating the method.

The liquid sample may be supplied to each cell by means of gravity. Alternatively, the liquid sample may be supplied to each cell by means of capillary action.

Embodiments of the present invention will now be described with reference to the accompanying drawings in which:
Figure 1 is a perspective view of a first embodiment of an apparatus in accordance with the first aspect of the present invention including a magazine for electrochemical detection or measurement in accordance with the second aspect of the present invention; and
Figure 2 is a plan view of a second embodiment of a magazine in accordance with the second aspect of the present invention.

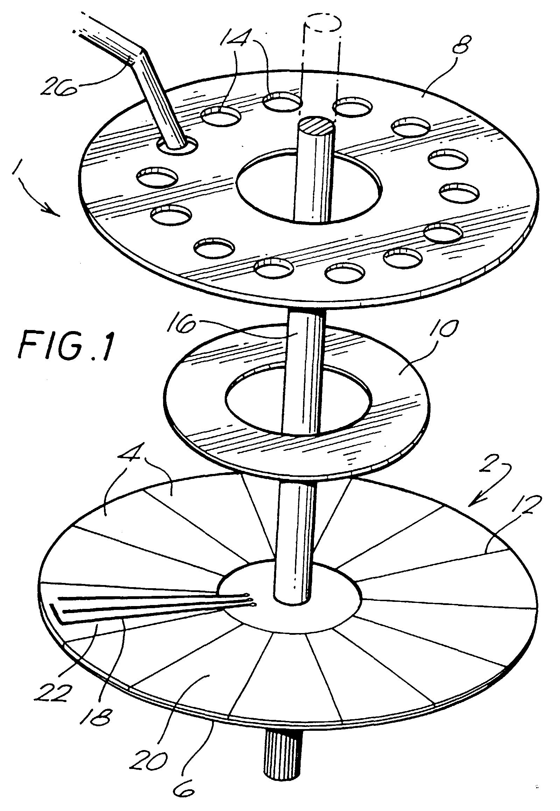

Referring to the drawings, a first embodiment of the present invention is shown in figure 1. In the first embodiment of the present invention, an apparatus (1) for electrochemical detection or measurement is provided with a magazine (2) which includes a plurality of cells (4) in which each cell (4) is suitable for a single electrochemical measurement. In this example there are 14 cells (4).

The magazine (2) is in the form of a disc with a base plate (6) and a cover plate (8) which are separated by a spacer (10). The magazine (2) has a plurality of radial cells (4) defined by separators (12) in the form of an insulating material such as an epoxy or other polymer on one or both of the cover or base plates (8, 6). The separators (12) provide a liquid barrier between the cells (4). The separators (12) could alternatively form part of one of the base plate (6) or the cover plate (8). The spacer (10) provides a uniform depth for the cells (4). The spacer (10) could be removed if the separators (12) have a uniform height from the base plate (6).

The cover plate (8) is provided with apertures (14) providing access to each of the cells (4). The apertures (14) are smaller in dimension than the cells (4), and are countersunk into the plate. The underside of the cover plate (8) is roughened in order to reduce the surface tension, and thus to facilitate filling of the cells (4) by minimising the formation of bubbles.

The cover plate (8) and base plate (6) are formed of rigid material. The cover plate (8), base plate (6) and spacer (10) are mounted on a shaft (16) and are accurately registered on the shaft (16) to approximately 0.5°. The cells (4) are precisely dimensioned to ensure a uniform volume of the cells (4).

The base plate (6) is formed of a ceramic disc which can be circular or of polygon shape. The base plate (6) is approximately 0.6mm to 1mm thick and is laser scribed. The base plate (6) of this embodiment is screen printed with electrodes of carbon ink which is a mixture of graphite and carbon, for example commercial printing ink. The base plate (6) is coated with a dielectric insulator (20) to mask the unused areas of the electrodes (18) and the electrode tracks (22). The electrode tracks (22) are also of carbon and lead to a central connector.

In an alternative arrangement, the electrodes can be disposed on both the cover plate and the base plate such that they are facing on another. This arrangement has the advantage of reducing the size of each cell and therefore increasing the number of cells which can be provided in the magazine.

In the example of the first embodiment, the cells (4) include an analyzing means in the form of an electrode structure for detecting and measuring the characteristics of at least one component of the liquid sample. Each cell (4) contains three electrodes (18) including a reference electrode, a counter electrode and a working electrode.

Each cell (4) has a depth of between 100 microns and 3mm.

The depth of each cell (4) could be greater than 3mm; however, the depth should not be less than 100 microns as the liquid sample will be too thin for dynamic reaction.

Chemicals to aid analysis, for example a reagent, can be either dropped onto the base plate (6) during construction or screen printed onto either the base plate (6) or the cover plate (8) when the electrodes (18) are printed.

The magazine (2) formed of the components of the base plate (6) and cover plate (8) with the intermediate spacer (10) is interchangeable on the shaft (16). The magazine (2) is held on the shaft (16) by a screw knob. Alternative means of attaching the magazine (2) to the shaft (16) include a quick release lever.

The magazine (2) is mounted at an angle such that the cells (4) can fill by gravity. The angle can be varied depending on the surface tension of the liquid sample.

The liquid sample is delivered to the cells (4) of the magazine (2) by means of an injector (26) which is disposed above the aperture (14) to the lowermost cell (4) in the angled magazine (2). The injector (26) is disposed above the aperture (14) such that the magazine (2) can rotate without interfering with the injector (26) such that the injector (26) can be positioned over the next adjacent cell (4).

The injector (26) is in communication with a pump or valve.

The pump can be peristaltic to deliver a predetermined amount of the liquid sample to each cell (4) at predetermined intervals.

The magazine (2) is rotated on the shaft (16) by a stepper motor which advances the magazine in discrete steps corresponding to the cells (4) of the magazine (2). In the example of 14 cells (4) in a magazine (2), the stepper motor advances the magazine (2) by 15°. The stepper motor is controlled by a controlling means.

The electrodes (18) of the cells (4) are connected by the electrode tracks (22) to a central connector in the form of a plug and socket. One half of the central connector, is in the form of either the plug or the socket, is permanently fixed to a lead or to the shaft (16). The central connector can be in the form of a permanently connected 26 way connector (in the example of a 24 cell magazine) or in the form of spring loaded connector pins for connection to each cell (4) in turn. An alternative arrangement would be to have connectors mounted on rollers for contact as the magazine (2) is rotated.

The central connector is connected to an analyzing processor in the form of computer hardware and software for analyzing the results of the measurement or detection in each cell (4). The connection can be by serial or parallel linked fixed cable. The analyzing processor can be integral with or external to the apparatus (1).

The processor results can be stored, broadcast or displayed. For example, the results can be copied to a storage medium, viewed on a liquid crystal display or broadcast to remote computer stations using serial communications, wireless communications or telecommunications.

For situations of remote operation, the results of the detection or measuring of each cell (4) can be communicated via a communication means for example a mobile phone or radio communication to an external computer or display.

The analyzing processor is provided in a sealed chamber which is protected from the magazine (2) which, in use, contains the liquid sample.

As an alternative to the arrangement of the magazine (2) in the form of a disc, the magazine could be provided in the form of a strip, a carousel, a roll or in the form of a film of cells (4). In the case of the first embodiment in which the cells (4) are filled by gravity, the magazine (2) must be arranged such that each cell (4), when adjacent the injector (26), is angled.

In use, the apparatus (1) can be used in situations in which a regular measurement or detection of a component or components of an aqueous or organic liquid sample is required. The magazine (2) contains a plurality of cells (4) each of which is suitable for a single electrochemical measurement. The cells (4) of this example are all formed with the same volume and are identically calibrated for comparable repeat readings.

As an example, the apparatus (1) could be used in a ground water bore hole in which periodic measurements of components in the water are required. In such a situation, there are clear advantages of having an automatic measuring apparatus which can be activated for a given period of time.

The liquid sample is supplied through the injector (26) in a predetermined amount to a first cell (4) in the magazine (2) of the apparatus (1). The pump which supplies the injector (26) supplies a given volume for the capacity of the cell (4).

The liquid sample enters the cell (4) through the aperture (14) in the cover plate (8) and spreads through the cell (4) by gravity and is held throughout the cell by the surface tension of the liquid. The first cell (4) is located at the lowest point of the angled magazine (2).

The liquid sample introduced into the first cell (4) is analyzed by means of a given electrochemical analysis.

Examples of different types of analysis are given below.

The results of the components of the analyzing means are communicated via the central connector to the analyzing processor.

The injector (26) can be purged before supplying a subsequent sample by ejecting a further quantity of the liquid sample into the used first cell (4) after the measurement has been recorded. The magazine (2) is then rotated by the stepper motor through a given angle to position an aperture (14) of a second cell (4) under the injector (26). The process is then repeated. The stepper motor can be arranged to advance to the next cell (4) at predetermined time intervals.

As an alternative to purging the injector (26) before rotation to a new cell (4), a syringe motor could be used which is completely emptied at each cell (4) thereby removing the need to purge the injector (26).

An intelligent microprocessor can be used in conjunction with the apparatus (1) to determine when measurements should be taken and to repeat measurements which fall outside predetermined parameters. In addition, an alarm can be incorporated and programmed to sound if a particularly high reading or low reading of a component is recorded.

The apparatus (1) can include an automatic magazine changing means for example in the form of a multi-disc changer used in compact disc players or jukeboxes.

Each magazine (2) can carry its calibration data which can be automatically transmitted to the processor when the magazine (2) is inserted into the apparatus (1). The calibration data can be carried on a microchip, RF tag or bar code, for example.

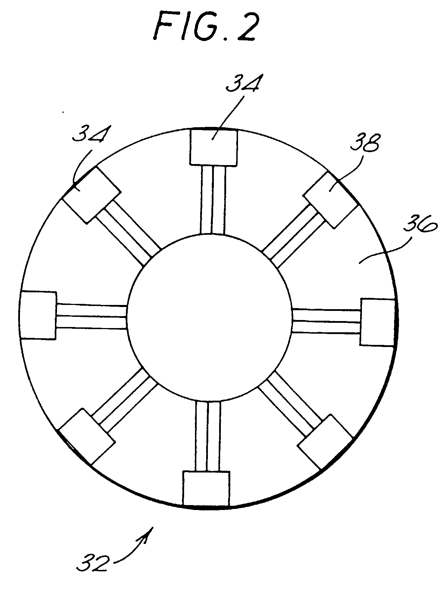

In a second embodiment of the present invention, as shown in figure 2, a magazine (32) is formed of a plurality of cells (34) in the form of capillary fill cells. The capillary fill cells (34) can be of a form described in European patent no. 0170375 and can be mounted radially on a disc or integrally formed within a disc. Alternatively, the capillary fill cells (34) can be mounted in a line on a magazine (32) in the form of a strip.

The magazine (32) is formed of a suitable substrate, for example a ceramic wafer and the electrodes (38) of the capillary fill cells (34) can be formed on or be integral with the matrix of the substrate (36). The number of cells (34) is governed by the geometry of the magazine (32).

A similar apparatus (31) to that used in the first embodiment described above can be used with the magazine (32) of the second embodiment. However, as an alternative to the injector (26) of the first embodiment, the capillary fill cells (34) can contact the liquid sample which is provided in a trough into which an entrance to each cell (34) is positioned as the magazine (32) rotates. The magazine (32) can be angled as in the first embodiment or disposed vertically or horizontally. It is important to achieve a zero contact angle between the entrance to the cell (34) on the periphery of the magazine (32) and the trough of liquid sample.

In a capillary cell (34) a capillary fill cover slip placed in close proximity to a three carbon electrode sensing cell, by ultrasonic bonding, causes capillary action to charge up the area bounded by the three electrodes and the capillary fill cover slip, which imparts control of the hydrodynamics of the liquid sample such that the measurement can be directly related to the concentration of the sample under investigation.

In the first and second embodiments described above, the cells (4, 34) are described as including electrodes (18, 38) for electrochemical analysis. An example of a measurement or detection or a component of the liquid sample is by hydrodynamically controlled anodic stripping voltammetry of an organic or aqueous sample by a three electrode system. For example, the determination of silver in a photographic fixer sample can be carried out by using square wave anodic stripping voltammetry with an accumulation of -0.9 V for 90 seconds. The square wave has an amplitude of 25 mV and a step of 2 mV yielding a peak of between -0.45 V and -0.5 V. A reagent coating of ammonium thiocyanate can be used for silver.

Similar measurements can be made for copper, zinc, lead, cadmium, iron and other heavy metals. The reagent chemical used may need to be altered.

Alternative measuring devices included in the cells (4, 34) can be made by potentiometry, titration, conductivity or other forms of voltammetry. Similarly, the apparatus (1) can be used with optical measuring cells or colourmetric measuring cells.

The cells (4, 34) can be in the form of a spreading layer of filter paper or a beaded layer with no cover plate such that a liquid sample is dropped onto the layer.

The present invention has the advantages of enabling more than one measurement to be carried out by comparable cells. The apparatus can be operated by an unskilled operator and can be left with minimum supervision. The apparatus has the further advantage of requiring discrete samples which avoids the waste of a continual flow of the liquid sample through a sensor.

The first embodiment has the advantage over the capillary fill system of the cells holding a greater volume of liquid and does not require an exact measurement of the dimensions of the cell. The use of the gravity fill method also has the advantage that it is not adversely effected by a dirty or viscous liquid sample. It also has the advantage over the capillary fill method as there is no need to add a surfactant to the cell.

Liquid may be drained from the apparatus after each use, or alternatively, it may be directed to a body, for example a cube, of solid absorbent material, which itself is replaced after each use.

Improvements and modifications can be made to the foregoing without departing from the scope of the present invention.

## Claims

1. An apparatus for electrochemical detection or measurement of a component of a liquid comprising:
a magazine having at least two separate cells; each cell having analyzing means for measuring or detecting a component of a liquid sample; supplying means for supplying the liquid sample to each cell in a sequential manner; advancing means for advancing the magazine to position the supplying means at a next cell.

2. An apparatus as claimed in claim 1, wherein a reagent is provided within each cell.

3. An apparatus as claimed in claim 1 or claim 2, wherein the analyzing means is an electrode structure for making measurements of one or more electrically measurable characteristic.

4. An apparatus as claimed in any one of claims 1 to 3, wherein the magazine is in the form of a rotatable disc, a strip, carousel, roll or film.

5. An apparatus as claimed in any of claims 1 to 4, wherein the cells are capillary fill cells and the means for supplying the liquid sample to a cell is by contact of the liquid sample with an opening to a cell.

6. An apparatus as claimed in any of the preceding claims, wherein the cells are separated by a liquid barrier.

7. A magazine for electrochemical detection or measurement of a component of a liquid comprising:
at least two separate cells; each cell having analyzing means for measuring or detecting a component of a liquid sample; and each cell having an entrance for input of a liquid sample into the cell.

8. A magazine as claimed in claim 7, wherein the analyzing means is a reagent.

9. A magazine as claimed in claim 7 or claim 8, wherein the analyzing means is an electrode structure for making measurements of one or more electrically measurable characteristics of the liquid sample.

10. A magazine as claimed in any of claims 7 to 9, wherein the cells are separated by a liquid barrier.

11. A magazine as claimed in any of claims 7 to 10, wherein the magazine is a disc, or is in the form of one of a strip, carousel, roll or film.

12. A method of electrochemical detection or measurement of a component of a liquid comprising:
supplying a liquid sample to a cell;
analyzing the liquid sample by means for measuring or detecting a component of the liquid sample;
communicating the result of the analysis from the cell;
advancing to a subsequent cell;
repeating the method.

13. A method as claimed in claim 12, wherein the liquid sample is supplied to each cell by means of gravity or by means of capillary action.
